(19) Europäisches Patentamt
European Patent Office
Office européen des brevets

(11) **EP 1 921 738 B1**

(12) **EUROPÄISCHE PATENTSCHRIFT**

(45) Veröffentlichungstag und Bekanntmachung des Hinweises auf die Patenterteilung:
**24.07.2019 Patentblatt 2019/30**

(51) Int Cl.:
*H02M 5/45* *(2006.01)*   *H02M 5/458* *(2006.01)*
*H02J 3/38* *(2006.01)*

(21) Anmeldenummer: **07021909.2**

(22) Anmeldetag: **12.11.2007**

(54) **Verfahren und Vorrichtung zum Betrieb eines Umrichters, insbesondere für Windenergieanlagen**

Method and device to control a dc-ac converter, particularly for a wind energy plant

Méthode et dispositif de commande pour un onduleur, en particulier pour une éolienne

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **10.11.2006 DE 102006053367**

(43) Veröffentlichungstag der Anmeldung:
**14.05.2008 Patentblatt 2008/20**

(73) Patentinhaber: **Senvion GmbH**
**22297 Hamburg (DE)**

(72) Erfinder:
• **Fortmann, Jens**
**13156 Berlin (DE)**

• **Kretschmann Jörg,**
**47906 Kempen (DE)**

(74) Vertreter: **Glawe, Delfs, Moll**
**Partnerschaft mbB von**
**Patent- und Rechtsanwälten**
**Postfach 13 03 91**
**20103 Hamburg (DE)**

(56) Entgegenhaltungen:
WO-A-03/065567    WO-A-2005/027301
WO-A-2005/099063    WO-A-2006/003224
WO-A-2006/069569    DE-A1- 10 010 350
DE-A1- 19 651 364

**Beschreibung**

Die Erfindung betrifft ein Verfahren und Vorrichtung zum Betreiben eines Umrichters, insbesondere für Windenergieanlagen mit einem über einen Windrotor angetriebenen Generator, zum Einspeisen elektrischer Leistung in ein Netz, wobei der Umrichter einen Zwischenkreis mit einem zugeordneten Energiespeicher aufweist. Genauer gesagt geht es darum, bei einer sprungartigen Spannungsstörung, insbesondere Spannungseinbruch im Netz, die in dem Energiespeicher gespeicherte Energie abzusenken und Leistung aus dem Zwischenkreis in das Netz einzuspeisen.

Moderne Windenergieanlagen sind üblicherweise drehzahlvariabel, so dass der Generator Wechselstrom mit unterschiedlicher Frequenz erzeugt. Zur Einspeisung in ein festfrequentes Versorgungsnetz (üblicherweise 50 Hz) ist eine Frequenzumrichtung erforderlich. Dazu werden Frequenzumrichter verwendet. Herkömmlicherweise wurden Windenergieanlagen so betrieben, dass sie sich bei Netzfehlern, insbesondere Kurzschlüssen, vom Netz trennen. Mit zunehmender Verbreitung von Windenergieanlagen und dem Anstieg der installierten Windleistung ist aber statt dessen ein netzstützender Betrieb der Windenergieanlagen, und zwar bezüglich Frequenz und Spannung, von den Netzbetreibern gefordert.

Grundsätzlich ergeben sich zwei wesentliche Aspekte, die zur Erfüllung der Anforderung der Netzbetreiber berücksichtigt werden müssen. Der erste Aspekt ist, dass bei sprungförmiger Änderung der Netzspannung ein Ansteigen der Spannung im Zwischenkreis begrenzt werden muss, um ein Abschalten des Umrichters zu vermeiden. Der zweite Aspekt ist, dass die mechanische Belastung des vom Windrotor zum Generator führenden Triebstrangs in Folge von sprungförmigen Netzspannungsänderungen so weit wie möglich hinsichtlich Höhe und Häufigkeit verringert werden soll.

Zu dem erstgenannten Aspekt ist es bekannt, zwischen Generator und Umrichter eine besondere Schaltung anzuordnen, die den Spannungsanstieg im Zwischenkreis begrenzt (WO-A-03/065567). Es ist weiter vorgeschlagen, mit einem in der Regel ohnehin vorhandenen Zwischenkreis-Chopper den Spannungsanstieg zu begrenzen. Alternativ kann auch vorgesehen sein, durch Reduktion der Schaltfrequenz des Umrichters die Zwischenkreisspannung und die Verluste zu verringern, und so den Umrichterstrom zu erhöhen (WO-A-2005/027301). Ferner ist es bekannt (WO-A-2006/069569), als Folge einer Netzstörung die Spannung im Zwischenkreis des Umrichters absinken zu lassen, bis schließlich Schaltelemente des Umrichters abgeschaltet werden. Im Ergebnis ist dann der Umrichter mit seinem Zwischenkreis elektrisch vom Netz getrennt und kann somit keinerlei Beitrag leisten.

Es hat sich gezeigt, dass die bekannten Maßnahmen jeweils nur in Bezug auf einen der beiden Aspekte wirksam sind, nicht aber in Bezug auf den anderen. So führen die bekannten Maßnahmen zur Verringerung des Spannungsanstiegs meist zu einer Erhöhung der Belastungen des Triebstrangs, und umgekehrt.

Ausgehend von dem zuletzt genannten Stand der Technik liegt der Erfindung die Aufgabe zugrunde, ein Verfahren und eine Vorrichtung zum Betreiben eines Umrichters anzugeben, mit dem ein besseres Verhalten erreicht wird.

Die erfindungsgemäße Lösung liegt in einem Verfahren und in einer Vorrichtung gemäß den Merkmalen der unabhängigen Ansprüche. Vorteilhafte Weiterbildungen sind Gegenstand der abhängigen Ansprüche.

Bei einem Verfahren zum Betreiben eines Umrichters, insbesondere für Windenergieanlagen mit einem über einen Windrotor angetriebenen Generator, zum Einspeisen elektrischer Leistung in ein Netz auch während einer sprungartigen Spannungsstörung, insbesondere Spannungseinbruch im Netz, wobei der Umrichter einen Zwischenkreis mit einem zugeordneten Energiespeicher umfasst, ist erfindungsgemäß vorgesehen ein Bereitstellen einer maximal möglichen Energieaufnahmekapazität im Energiespeicher des Zwischenkreises durch gezieltes Absenken des Energieniveaus im Zwischenkreis auf einen vorbestimmbaren Niederwert des Energieniveaus in Abhängigkeit von der Kapazität des Energiespeichers, wobei nach dem Absenken des Energieniveaus der Energiespeicher zur Aufnahme einer am Ende der sprungartigen Spannungsstörung im Zwischenkreis entstehenden Energiemenge ausgebildet ist.

Kern der Erfindung ist der Gedanke, die in dem Zwischenkreis gespeicherte Energie soweit zu reduzieren, dass die bei einer sprungförmigen Spannungsstörung herkömmlicherweise erfolgende Aktivierung von Schutzeinrichtungen des Umrichters, wie insbesondere eines Zwischenkreis-Choppers oder einer Schutzschaltung (Crowbar) zwischen Generator und Umrichter, möglichst verringert werden kann. Die Erfindung erreicht dies dadurch, dass die Spannung (oder der Strom) im Zwischenkreis, genauer gesagt in dessen meist kapazitiven oder induktiven Energiespeicher, gezielt abgesenkt wird, um je nach Höhe des Spannungssprungs ausreichend Speicherkapazität freizubekommen, damit bei Rückkehr der Netzspannung am Ende der sprungförmigen Spannungsstörung auftretende Leistungsspitzen aufgenommen werden können. Der Gefahr eines Überschreitens kritischer Grenzwerte im Zwischenkreis kann damit entgegengewirkt werden. Die Erfindung erreicht so eine Verringerung der Häufigkeit und Dauer der Aktivierung der Umrichter-Schutzschaltungen. Dies verbessert nicht nur die Qualität der in das Netz eingespeisten elektrischen Leistung, sondern vermeidet insbesondere schädliche Momentenschwankungen, und vermeidet damit die aus den Momentenschwankungen resultierende Belastung bzw. Beschädigungsgefahr für Komponenten, wie den Generator und seinen Triebsstrang. Zudem verbessert die Erfindung die "Ride-through"-Eigenschaft bei temporärem Einbruch und Wiederkehr der Netzspannung, insbesondere bei sprungförmigen Netzspannungsstörungen.

Der Begriff sprungartige Spannungsstörung umfasst sowohl eine plötzliche Verringerung der Spannung im Netz, wobei ein Kurzschluss der Extremfall ist, wie auch einen plötzlichen Anstieg, und zwar über das für den Normalbetrieb vorgesehene Toleranzband hinaus.

Unter einer Leistungsspitze werden eine transiente, insbesondere induzierte, Überspannung bzw. ein transienter, insbesondere induzierter, Überstrom verstanden.

Es ist zwar bekannt, die Spannung im Zwischenkreis im Falle eines Kurzschlusses abzusenken (WO-A-2005/027301), jedoch geschah dies allein mit dem Ziel, günstigere Betriebsverhältnisse am Umrichter für die Einspeisung elektrischer Leistung während des Zeitraums des Spannungseinbruchs in das Netz bereit zu stellen. Auf die Verhältnisse bei Wiederkehr der Netzspannung wurde keine Rücksicht genommen. Insbesondere wurde nicht beachtet, ob die Spannung im Zwischenkreis so weit vermindert wurde, dass in dem Energiespeicher des Zwischenkreises soviel Energie gespeichert werden konnte, um bei der Wiederkehr der Netzspannung noch eine ausreichende Reserve zur Verfügung zu haben und damit ein Zünden der Crowbar-Schaltung möglichst zu verhindern. Es war vielmehr von Zufälligkeiten abhängig, ob die Spannungswiederkehr so langsam oder so schlagartig erfolgte, dass die dabei auftretenden Überströme im Zwischenkreis abgepuffert werden konnten oder nicht. Die Erfindung sorgt nun dafür, dass bis zur Netzspannungswiederkehr möglichst viel Energieaufnahmekapazität im Zwischenkreis bereitgestellt wird. Damit lässt sich auf verblüffend einfache Weise eine deutliche Verbesserung des Betriebsverhaltens des Umrichters und damit der gesamten Windenergieanlage erreichen. Es verbessert sich aber nicht nur das Betriebsverhalten, sondern es wird auch eine Schonung der Komponenten der Windenergieanlage erreicht.

In der Regel wird das Verfahren so geführt, dass die erfindungsgemäße Absenkung auf den Niederwert während der sprungartigen Netzspannungsstörung erfolgt in Vorbereitung auf die Wiederkehr der Netzspannung. Da die Zeitdauer bis zur Wiederkehr der Netzspannung meist nicht bekannt ist, erfolgt die erfindungsgemäße Absenkung auf den Niederwert zweckmäßigerweise sofort nach Erkennen der Netzspannungsstörung. Es kann aber auch vorgesehen sein, dass die Absenkung in Vorbereitung auf eine zu einem späteren Zeitpunkt auftretende Netzspannungsstörung erfolgt. Diese präemptive Variante bietet den Vorzug, dass bereits zu Beginn der Netzstörung freie Kapazität zum Aufnehmen von Überströmen bereitsteht. Vorzugsweise erfolgt dies so, dass die Absenkung zum ersten Mal in Vorbereitung auf die erwartete Netzspannungsstörung durchgeführt und ein zweites (oder weiteres) Mal durchgeführt wird, nachdem das Auftreten der Netzspannungsstörung erkannt wurde. Damit erstrecken sich die erfindungsgemäßen Vorzüge nicht nur auf die Wiederkehr der Netzspannung, sondern können bereits zu Beginn der Netzstörung zur Entfaltung kommen.

Gemäß einer besonders bevorzugten Ausführung wird das erfindungsgemäße Verfahren bei einer Windenergieanlage mit einem doppelt gespeistem Generator verwendet. Gerade dieser Anlagentyp bereite herkömmlicherweise große Schwierigkeiten, da das Stator/Rotor-Wicklungspaar wie ein Transformator wirkt und so im Rotorkreis erheblich höhere Spannungen als im übrigen Netz induziert werden. In der Regel werden dabei Grenzwerte für die Ausgangsspannung des Umrichters überschritten. Als Transienten können kurzschlussartige Ströme im Rotor und Stator auftreten. Dies kann ein unerwünschtes Abschalten des maschinenseitigen Umrichters zur Folge haben. Außerdem wird als Folge der hohen Ströme in dem Rotor dem Zwischenkreis für kurze Zeit eine Wirkleistung zugeführt, die über der Nennleistung liegt, wodurch die Spannung im Zwischenkreis besonders schnell und stark ansteigt. Entsprechend groß waren die Schalthäufigkeit und -intensität der Umrichter-Schutzschaltungen und die sich daraus ergebenden negativen Folgen für die Netzqualität und die mechanische Belastung des Triebstrangs. Diese nachteiligen Auswirkungen können dank der Anwendung der Erfindung auf diesen Anlagentyp vermindert werden.

Zweckmäßigerweise wird der Niederwert, auf den die Energie in dem Zwischenkreis abgesenkt wird, nach folgender Formel berechnet:

$$U_{DCMin} = Max\left( U_{Netz} \cdot \sqrt{2} \cdot k_{Last1}, \; U_{Netz} \cdot \sqrt{2} \cdot \frac{N - N_{Syn}}{N_{Syn}} \cdot \omega_{21Gener} \cdot k_{Last2} \right)$$

mit $U_{Netz}$ als Effektivwert der verketteten Netzspannung, N der Drehzahl, $N_{Sync}$ der Synchrondrehzahl, $\omega_{21Gener}$ als Windungszahlverhältnis Rotor zu Stator des Generators und $K_{Last}$ als lastabhängigen Faktor.

Das Absenken des Energieniveaus in dem Zwischenkreis auf den Niederwert kann in verschiedener Weise erfolgen. Bevorzugt geschieht dies durch Ansteuern des netzseitigen Wechselrichters, um so die im Zwischenkreis überschüssige Energie nutzbringend in das Netz abzuführen. Ist dies nicht erwünscht oder ist dies nicht möglich, da keine Netzspannung mehr besteht, so kann alternativ die Chopper-Schaltung so lange angesteuert werden, bis der gewünschte Energiewert erreicht ist. Diese Verfahrensweise macht sich zu nutze, dass zum Komponentenschutz in der Regel ohnehin eine Chopper-Schaltung vorhanden ist. Sie kann dazu genutzt werden, das Energieniveau in dem Zwischenkreis gezielt abzusenken. Zusätzlicher Hardwareaufwand braucht dann nicht anzufallen.

Der Umrichter mit Zwischenkreis weist üblicherweise einen Aufbau auf, bei dem ein generatorseitiger Wechselrichter über den Zwischenkreis mit einem netzseitigen Wechselrichter verbunden ist. Diese Bauweise hat den Vorteil, dass sie einen Leistungsfluss in beiden Richtungen ermöglicht, und eignet sich damit insbesondere für doppelt gespeiste Asynchronmaschinen als Generator. Es soll aber nicht ausgeschlossen sein, dass der generatorseitige Wechselrichter als Gleichrichter ausgebildet ist. Wenn nachfolgend von dem netzseitigen Wechselrichter die Rede ist, so kann damit auch ein Gleichrichter gemeint sein.

Zur Erläuterung der Erfindung sei weiter davon ausgegangen, dass wie üblich eine Crowbar-Schaltung für den Schutz des Generators und des Umrichters vorgesehen ist. Der Begriff der Crowbar-Schaltung ist hier allgemein zu verstehen, er ist nicht auf die häufigste Ausführung als eine Art Kurzschlussschaltung begrenzt.

Zweckmäßigerweise wird nach dem Auftreten des Spannungseinbruchs dem netzseitigen Wechselrichter ein Spannungssollwert vorgegeben, der über dem Amplitudenwert der eingebrochenen Netzspannung liegt. Vorzugsweise ist der Spannungssollwert höchstens 15%, weiter vorzugsweise zwischen 5% und 10%, über dem Amplitudenwert der eingebrochenen Netzspannung. Durch diese Ansteuerung des Wechselrichters wird erreicht, dass massiv Strom aus dem Zwischenkreis in das Netz eingespeist werden kann, wobei sich je nach Spannungssollwert eine niedrige Spannung im Zwischenkreis einstellt.

Es kann aber vorgesehen sein, dass der generatorseitige Wechselrichter während der Spannungsstörung so lange deaktiviert wird, bis die Spannung im Netz wieder einen vorbestimmten Wert der Netzsollspannung erreicht hat. Diese Verfahrenweise hat nicht nur den Vorteil, dass die Wahrscheinlichkeit des Auftretens von Überschreitungen kritischer Grenzen im Zwischenkreis weiter erheblich reduziert wird. Sie hat weiter den Vorteil, dass je nach Höhe des Spannungssprungs nur wenig Leistung aus dem Generator in den Zwischenkreis fließt, so dass nur entsprechend wenig Leistung abgeführt zu werden braucht, um das Energieniveau im Zwischenkreis auf den Niederwert zu senken. Dies ist insbesondere dann günstig, wenn die sprungförmige Spannungsstörung ein Spannungsanstieg ist. Unabhängig davon erfolgt zweckmäßigerweise ein Wiederzuschalten des generatorseitigen Wechselrichters erst nach einer Mindestzeit, damit durch eine Aktivierung der Crowbar hervorgerufene Ausgleichsvorgänge abklingen können.

Zweckmäßigerweise wird als Zwischenkreis ein Gleichspannungszwischenkreis mit einem Kondensator als Energiespeicher verwendet. Dies ist aber nicht zwingend erforderlich. Es kann gewünschtenfalls auch vorgesehen sein, dass der Zwischenkreis als Gleichstromzwischenkreis mit einer Spule als Energiespeicher ausgeführt ist.

Die Erfindung bezieht sich weiter auf eine Vorrichtung mit den Merkmalen des unabhängigen Vorrichtungsanspruchs. Sie umfasst als Kern ein Sollwertmodul, das zur Einstellung des Niveaus der in dem Zwischenkreis gespeicherten Energie vorgesehen ist. Zur näheren Erläuterung und für weitere vorteilhafte Ausgestaltungen wird auf vorstehende Ausführungen verwiesen.

Die Erfindung wird nachfolgend unter Bezugnahme auf die beigefügte Zeichnung beschrieben, in der ein vorteilhaftes Ausführungsbeispiel dargestellt ist. Es zeigen:

Fig. 1     eine schematische Übersichtsdarstellung einer an ein elektrisches Versorgungsnetz angeschlossenen Windenergieanlage gemäß der Erfindung; und

Fig. 2     eine Schaltungsansicht eines Umrichters der Windenergieanlage in Figur 1;

Fig. 3     ein Diagramm mit Spannungszeitverläufen bei einem Spannungseinbruch im Netz ohne die Erfindung; und

Fig. 4     ein Diagramm mit Spannungszeitverläufen bei einem Spannungseinbruch im Netz gemäß der Erfindung.

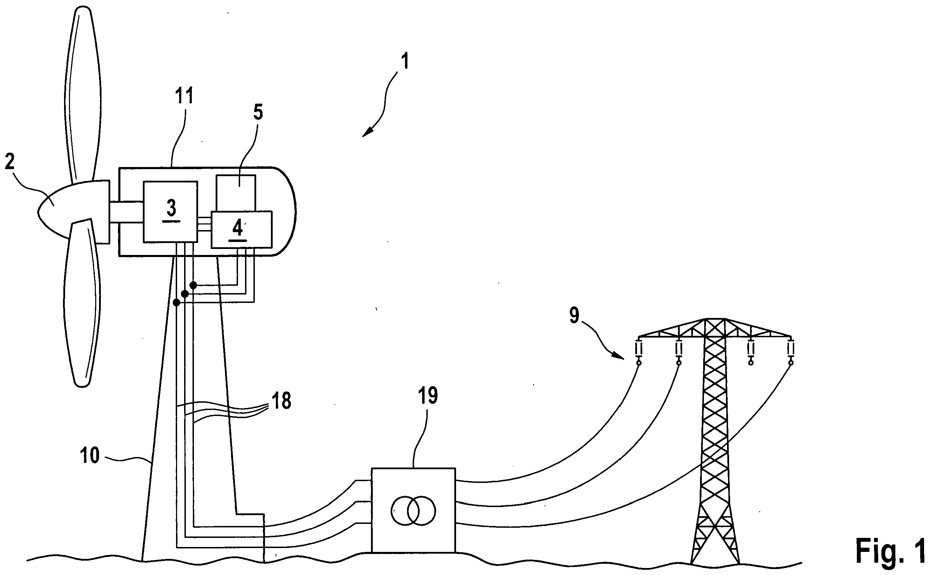

Figur 1 zeigt schematisch eine zur Ausführung der Erfindung ausgebildete Windenergieanlage, die mit der Bezugsziffer 1 versehen ist. Die Windenergieanlage 1 weist in bekannter Weise eine auf einem Turm 10 schwenkbar angeordnete Gondel 11 auf. An deren Stirnseite ist ein Windrotor 2 drehbar angeordnet. Er treibt über eine Rotorwelle einen Generator 3 an, der vorzugsweise als doppelt gespeiste Asynchronmaschine mit mehrsträngiger Rotor- und Stator-Wicklung ausgeführt ist. Die Stator-Wicklung des Generators 3 ist direkt an eine mehrsträngige Anschlussleitung 18 der Windenergieanlage 1 angeschlossen. Die Rotor-Wicklung (nicht dargestellt) ist an einen (generatorseitigen) Wechselrichter 41 eines Umrichters 4 angeschlossen; parallel zur Rotorwicklung ist eine Crowbar-Schaltung 40 als Umrichterschutzschaltung angeschlossen. Mit seinem (netzseitigen) Wechselrichter 48 ist der Umrichter 4 an die Anschlussleitung 18 angeschlossen. Ferner ist eine Steuerung 5 für den Betrieb des Umrichters 4 vorgesehen.

Die von dem Generator 3 erzeugte elektrische Leistung wird über die Anschlussleitung 18 an einen Transformator 19 geleitet. Er ist dazu ausgebildet, die von der Windenergieanlage 1 gelieferte Spannung von der Niederspannungsebene auf die Spannungsebene des Mittelspannungsnetzes 9 umzusetzen. Der Transformator 19 kann sowohl die Leistung einer einzelnen Windenergieanlage 1 übertragen oder aber die Leistung einer Mehrzahl von Windenergieanlagen (Windpark).

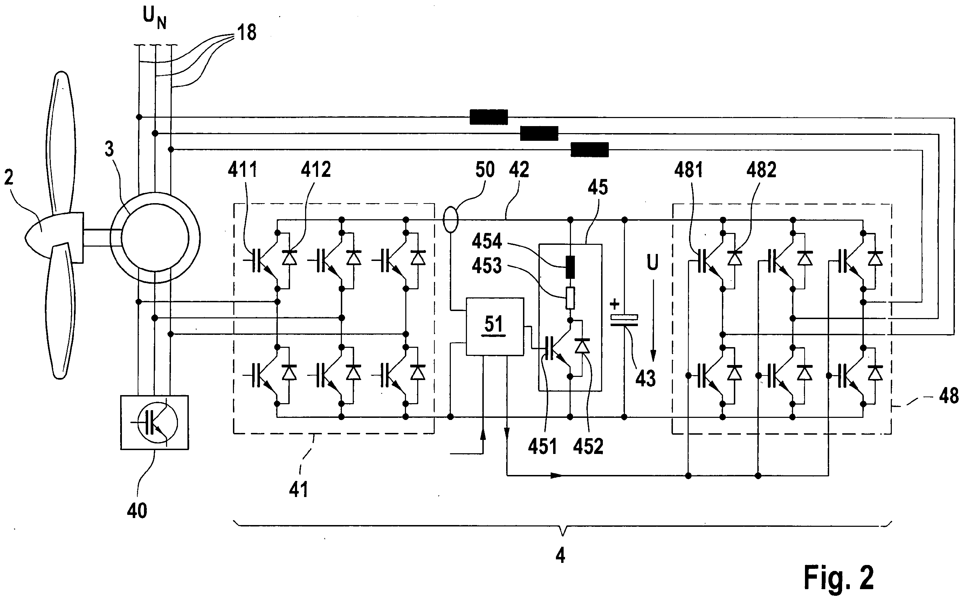

Figur 2 zeigt die schematische Darstellung des Umrichters 4. Er weist als Hauptkomponenten einen generatorseitigen Wechselrichter 41, einen netzseitigen Wechselrichter 48 und einen kapazitiven Zwischenkreis 42 auf. Die Wechselrichter 41, 48 des Umrichters 4 sind mit selbstlöschenden Halbleiterschaltern (in dem dargestellten Beispiel IGBT 411, 481 mit einer Sperrspannung von 1700 V) plus antiparallelen Rückstromdioden 412, 482 ausgebildet. Bei dieser Ausführung ist eine Wirkleistungsübertragung in beide Richtungen ermöglicht, wobei beide Wechselrichter 41, 48 zusätzlich und unabhängig voneinander Blindleistung mit dem Generator bzw. dem Netz austauschen können. Die Ansteuerung der IGBT 411, 481 erfolgt durch die Steuerung 5 in an sich bekannter Weise, so dass an dieser Stelle nicht näher darauf eingegangen zu werden braucht.

Der Zwischenkreis 42 ist als Gleichspannungszwischenkreis ausgebildet. Er umfasst eine Mehrzahl von Kondensatoren in Parallel- und Serienschaltung (in dem Beispiel mit einer Nennspannung von 1100 V) als Energiespeicher 43. Es sei angemerkt, dass bei einem Gleichstromzwischenkreis entsprechend Spulen vorgesehen sind.

Dem Zwischenkreis 42 ist ferner ein Zwischenkreis-Chopper 45 zugeordnet. Er dient dazu, im Zwischenkreis 42 gespeicherte Energie kontrolliert zu verringern. Er umfasst einen IGBT 451 und eine antiparallel geschaltete Schutzdiode 452, die in Serie geschaltet sind zu einem Lastwiderstand 453 mit einer Lastinduktivität 454. Beim Aktivieren des Zwischenkreis-Choppers 45 wird die in dem Zwischenkreis 42 enthaltende Energie, die im Wesentlichen in dem Energiespeicher 43 gespeichert ist, schnell vermindert. Einem Anstieg der Spannung im Zwischenkreis 42 auf überkritische Werte kann damit wirkungsvoll begegnet werden. Dadurch kann die Zwischenkreisspannung dann begrenzt werden, wenn kurzzeitig hohe Wirkleistungsanstiege aus dem generatorseitigen Wechselrichter 41 anstehen, die vom netzseitigen Wechselrichter 48 nicht mit gleicher Anstiegsgeschwindigkeit aufgenommen werden können. Dies ist insbesondere bei sprungförmigen Netzspannungsänderungen der Fall. Reicht auch die Leistung des Zwischenkreis-Choppers 45 nicht aus, um die kurzzeitig vorhandene Differenz-Wirkleistung beider Wechselrichter 41, 48 abzudecken, wird in an sich bekannter Weise die Crowbar 40 aktiviert. Sie unterbindet die Zufuhr von Wirkleistung aus dem generatorseitigen Wechselrichter durch Kurzschluss der Rotorwicklung.

Für die Ansteuerung des Zwischenkreis-Choppers 45 ist in der Steuerung 5 ein besonderes Steuermodul 51 ausgebildet. Seine Funktion wird nachfolgend noch näher erläutert werden. Es gibt an seinem Ausgang Schaltimpulse für den Zwischenkreis-Chopper 45 ab, so dass dieser in Abhängigkeit von dem Ausgangssignal durchschaltet (zündet) oder nicht.

Das Sollwertmodul 51 weist einen Eingang auf, an dem eine Spannungsmesseinrichtung 50 für die Spannung im Zwischenkreis 42 angeschlossen ist. Es weist ferner einen optionalen Eingang auf, an dem ein Wert für eine gewünschte Pausenzeit einstellbar ist. Unter Pausenzeit wird hierbei eine Zeitdauer verstanden, die verstreichen soll, bis der Umrichter 4, genauer gesagt der netzseitige Wechselrichter 48, am Ende der sprungförmigen Spannungsstörung wieder Leistung in das Netz einspeist. Diese Zeitdauer wird als $T_s$ bezeichnet. Für sie kann ein Erfahrungswert (beispielsweise 10 Millisekunden) herangezogen werden, der ggf. fest implementiert ist. Als Zeitdauer kann auch eine sog. Orientierungszeit verwendet werden, welche die Zeitdauer angibt, die der Wechselrichter 48 benötigt, um sich wieder mit dem Netz zu synchronisieren. Das Sollwertmodul 51 ist dazu ausgebildet, in Abhängigkeit von der Zeitdauer und einem am Ende der sprungförmigen Spannungsstörung (z. B. Wiederkehr der Netzspannung nach Einbruch oder bei Kurzschluss) auftretenden Überstrom aus dem Rotor 3 in den Zwischenkreis 42 des Umrichters 4 eine Ladungs- bzw. eine Energiemenge zu berechnen, die in dem Zwischenkreis 42 aufzunehmen ist. Damit diese Ladungs-/Energiemenge ohne Überschreiten kritischer Grenzwerte in den Zwischenkreis 42 aufgenommen werden kann, bestimmt das Sollwertmodul 51 einen Niederwert, auf den der Energiespeicher 43 des Zwischenkreises 42 nach Beginn der Spannungsstörung entladen wird, so dass noch ausreichend Kapazität zur Aufnahme der bei Spannungswiederkehr auftretenden Ladungs- bzw. Energiemenge bleibt. Das Sollwertmodul 51 ist weiter dazu ausgebildet, den Zwischenkreis-Chopper 45 derart anzusteuern, dass beim Erkennen einer sprungförmigen Spannungsstörung im Netz 9 der Energiespeicher 43 des Zwischenkreises 42 auf den Niederwert entladen wird. Bei dem in dem Beispiel dargestellten kapazitiven Zwischenkreis 42 geschieht dies durch Absenken der Zwischenkreisspannung. Die Kondensatoren des Energiespeichers 43 werden dadurch soweit entladen, dass für eine begrenzte Zeit zusätzliche Wirkleistung aufgenommen werden kann. Ohne die erfindungsgemäße Entladung auf den Niederwert könnte diese Art der Leistungseinspeicherung nicht erfolgen. Damit wird zum einen erreicht, den Zwischenkreis-Chopper 45 zu entlasten, und zum anderen kann die Wahrscheinlichkeit einer Aktivierung der Crowbar-Schaltung 40 verringert werden. Der Gefahr von schädlichen Schwingungen im Antriebsstrang, insbesondere aufgrund von Schwankungen des elektrischen Bremsmoments durch Zünden der Crowbar-Schaltung 40 am Ende der sprungförmigen Spannungsstörung und Wiederkehr der Netzspannung in ihren normalen Bereich, kann damit dank der Erfindung entgegengewirkt werden.

Es kommt nicht darauf an, ob bei Abschluss der Spannungswiederkehr und dem Abklingen der dadurch bedingten Überströme im Zwischenkreis 42 bereits die volle Nennspannung erreicht wurde oder nicht. Ist sie erreicht worden, kann der netzseitige Wechselrichter 48 unmittelbar damit beginnen, elektrische Leistung in das Netz 9 einzuspeisen. Ist sie noch nicht erreicht, lädt sich der Zwischenkreis 42 in herkömmlicher Weise über den Gleichrichter 41 so lange auf, bis die Nennspannung (typischerweise 1100 Volt) erreicht ist, und der netzseitige Wechselrichter 48 dann in normaler Weise Leistung in das Netz 9 einspeist.

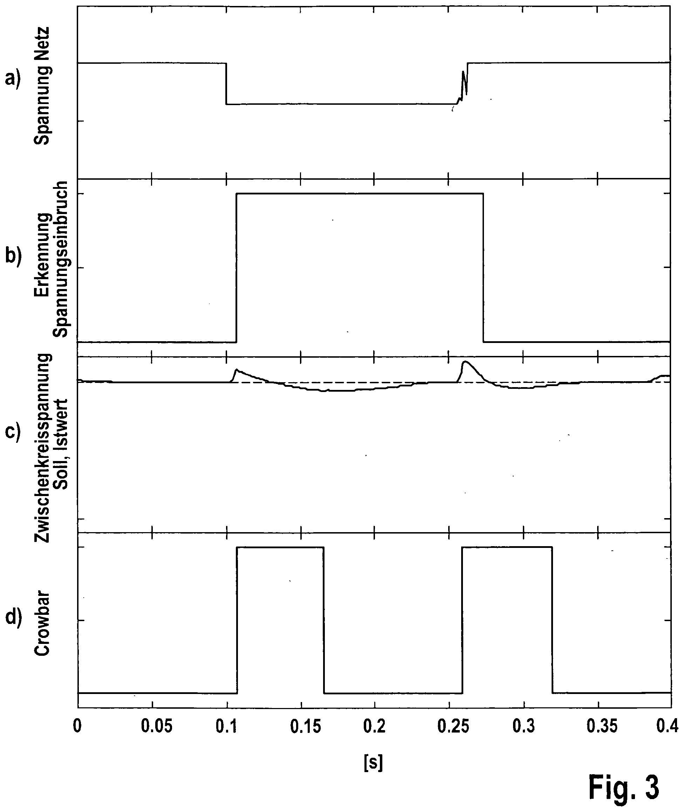

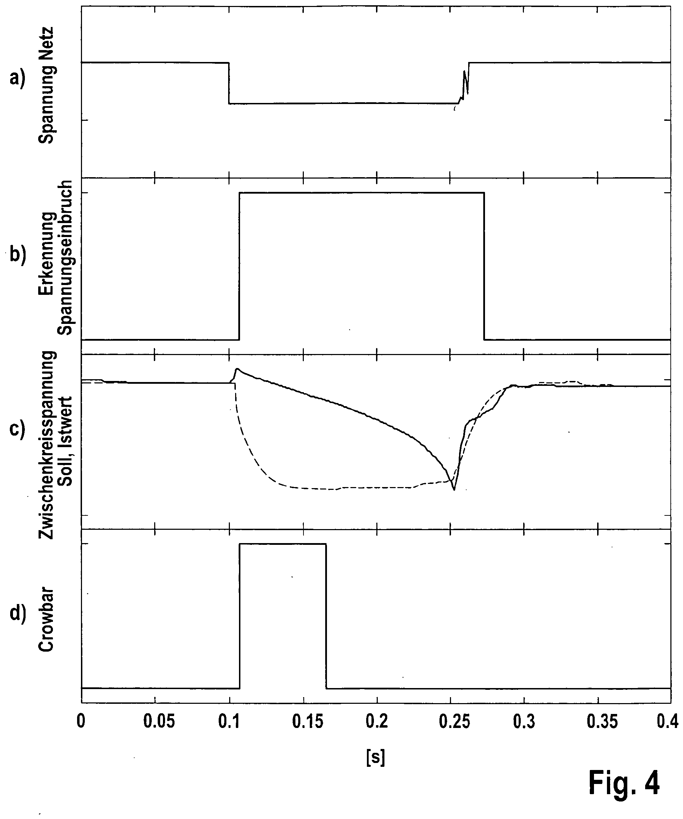

In den Figuren 3 und 4 sind Zeitverläufe der Spannungen im Netz und im Zwischenkreis sowie die Aktivität der Crowbar-Schaltung 40 für den Fall eines Netzspannungseinbruchs als sprungförmige Spannungsstörung dargestellt. Es sei angenommen, dass im Zeitpunkt t=0,1 Sekunden die Netzspannung schlagartig um einen Wert von ca. 30% der Sollspannung einbricht. Etwa 150 Millisekunden später, zum Zeitpunkt t=0,25 Sekunden, kehrt die Netzspannung wieder zurück. Der Verlauf der Netzspannung ist in einer oberen Kurve a) in Figur 4 dargestellt. Mittels eines in die Steuereinrichtung 5 integrierten Spannungsdetektors kann ein entsprechendes Einbruchssignal erzeugt werden (siehe Kurve b). In der Kurve c) ist mit einer durchgezogenen Linie die Ist-Spannung im Zwischenkreis 42 dargestellt. Man erkennt, dass bei Beginn des Spannungseinbruchs eine leichte Spannungserhöhung auftritt. Diese Spannungserhöhung würde sich fortsetzen und könnte schließlich zu Komponentenschäden führen, wenn nicht die Crowbar-Schaltung 40 zum Schutz gezündet wurde (siehe Kurve d). Dank der Aktivität der Crowbar-Schaltung 40 wird somit einer übermäßigen Spannungserhöhung im Zwischenkreis entgegengewirkt. Die Spannung im Zwischenkreis 42 sinkt, bis sie schließlich einen Wert etwas unterhalb des Sollwerts erreicht und die Crowbar-Schaltung abschaltet. Die Spannung im Zwischenkreis 42 kann dann wieder langsam auf ihrem Sollwert (gestrichelte Kurve c) ansteigen. Ein in dem Zwischenkreis 42 angeordneter Energiespeicher ist entsprechend ebenfalls auf einen Normalenergiewert aufgeladen. Damit ist ein quasistationärer Zustand erreicht, der bis zum Ende des Spannungseinbruchs andauern kann. Kehrt die Netzspannung nun wieder (t=0,25 Sekunden, siehe Figur a), so wird - wie vorstehend erläutert - in dem Rotorkreis des doppelt gespeisten Generators eine hohe Spannung induziert. Die Spannung im Zwischenkreis 42 steigt entsprechend an (siehe Kurve c), bis schließlich die Crowbar-Schaltung zum Schutz der Komponenten vor einer Überlastung zündet (siehe Kurve d). Die Ist-Spannung im Zwischenkreis 42 sinkt dann aufgrund des Aktivierens der Crowbar-Schaltung ab, bis sie wieder einen Wert etwas unterhalb der Soll-Spannung erreicht und die Crowbar-Schaltung sich abschaltet. Mit der Wiederkehr der Netzspannung wird entsprechend auch das Erkennungssignal für den Spannungseinbruch zurückgesetzt (siehe Kurve b).

In Figur 4 sind entsprechende Zeitverläufe für die Spannungen und Signale bei einer Vorrichtung und einem Verfahren gemäß der Erfindung dargestellt. Wiederum bricht zum Zeitpunkt t=0,1 Sekunden die Netzspannung ein (Kurve a). Die Ist-Spannung im Zwischenkreis 42 steigt entsprechend an, so dass zum Schutz vor schädlicher Überspannung die Crowbar-Schaltung 40 zündet. Das dabei von der Detektorschaltung für den Spannungseinbruch ausgegebene Erkennungssignal ist in Kurve b) dargestellt. Der Verlauf der Spannung im Zwischenkreis entspricht zu Beginn den in Figur 3 dargestellten. Die Spannung steigt zuerst an, bis die Crowbar-Schaltung 40 zündet und schließlich abschaltet, wenn die tatsächliche Spannung (durchgezogene Kurve) im Zwischenkreis 42 auf einen Wert unterhalb der ursprünglichen Sollspannung gesunken ist. Aufgrund des erkannten Spannungseinbruchs (Kurve b) bestimmt das erfindungsgemäße Sollwertmodul 51 ein niedrigeres Energieniveau für den Zwischenkreis 42. Bei dem dargestellten Ausführungsbeispiel handelt es sich um ein Spannungszwischenkreis, so dass als Ausgangswert eine Soll-Spannung (gestrichelte Kurve) ausgegeben wird (siehe gestrichelte Kurve c). Sie beträgt nur etwas mehr als 60% der ursprünglichen Spannung im Zwischenkreis 42. Das bedeutet, dass die in dem Energiespeicher 43 des Zwischenkreises 42 gespeicherte Energie auf einen Niederwert abgesenkt wird, der lediglich etwa 36% des ursprünglichen Werts beträgt. Damit ist in dem Energiespeicher 43 eine beträchtliche Kapazität frei, um im Zwischenkreis 42 bei Wiederkehr der Netzspannung auftretende Überströme aufzunehmen. Während des Andauerns des Spannungseinbruchs im Netz sinkt die tatsächliche Spannung im Zwischenkreis (durchgezogene Kurve c) allmählich auf den vom Sollwertmodul 051 ausgegebenen niedrigen Wert für die Soll-Spannung (gestrichelte Kurve c) ab. Im Moment der Spannungswiederkehr im Netz (bei t=0,25 Sekunden) steigt die Spannung im Zwischenkreis 42 wegen der Spannungsübersetzung im Rotorkreis des doppelt gespeisten Generators rasch an. Da der Energiespeicher 43 aber auf seinen Niederwert entladen ist, kann dessen freie Kapazität genutzt werden, um möglichst viel der durch den Spannungssprung in den Zwischenkreis 42 eingebrachten Energie in den Energiespeicher 43 aufzunehmen. Dies hat bei ausreichend freier Kapazität im Energiespeicher 43 die erwünschte Wirkung, dass die tatsächliche Spannung im Zwischenkreis 42 bei Netzwiederkehr zwar ansteigt, aber nicht das ursprüngliche Sollniveau überschreitet. Ein Zünden der Crowbar-Schaltung 40 kann damit in vielen Fällen vermieden werden. Im weiteren Verlauf nähert sich die tatsächliche Spannung im Zwischenkreis 42 allmählich wieder dem ursprünglichen Wert an, wobei auch der Sollwert wieder allmählich auf den Nenn-Sollwert erhöht wird. Der Umrichter 4 kann dahin wieder in den Regelbetrieb übergehen und Energie in das elektrische Netz einspeisen.

Dank der auf einen Niederwert abgesenkten Soll-Spannung im Zwischenkreis 42 ist der Kondensator als Energiespeicher 43 in dem Gleichspannungszwischenkreis 42 soweit entladen, dass er je nach Größe des Spannungseinbruchs die bei Wiederkehr auftretenden Überströme ganz oder zumindest zum Teil aufnehmen kann. Einem Zünden der Crowbar bei Wiederkehr der Netzspannung kann damit entgegengewirkt werden. Unerwünschte Belastungen aufgrund von Momentenschwankungen am Generator 3 und dem zum Windrotor 2 führenden Antriebsstrang können dadurch verringert werden.

Für den Betrieb der Erfindung kommt es nicht darauf an, ob der maschinenseitige Wechselrichter 41 in der Anfangsphase des Spannungseinbruchs nach Abklingen der Aktivität der Crowbar-Schaltung 40 gleich wieder elektrische Leistung in den Zwischenkreis 42 einspeist, oder ob das Wiedereinspeisen so lange verzögert wird, bis die Netzspannung wieder einen definierten höheren Wert (von beispielsweise 90% der Netzsollspannung) erreicht hat. Eine Verzögerung hat den Vorteil, dass die bei Spannungswiederkehr entstehenden Überströme und dadurch bedingte Speisung des Zwischenkreises 42 über die Rückstromdioden 412 geringer ausfällt, so dass der Zwischenkreis-Chopper 45 nur wenig belastet wird und daher klein dimensioniert sein kann.

Abschließend sei noch darauf hingewiesen, dass der eigene Zwischenkreis-Chopper 45 für die Erfindung optional ist. Das erfindungsgemäße Abführen von Energie aus dem Zwischenkreis 42 zum Erreichen eines Niederwerts kann durch eine geeignete Ansteuerung des netzseitigen Wechselrichters 48 erfolgen (dieser Fall liegt der Darstellung in Fig. 4 zugrunde). Dies setzt zwar voraus, dass noch eine gewisse Restspannung im Netz vorhanden ist, jedoch ist dies üblicherweise bei über einen Mittelspannungstransformator 19 angeschlossenen Windenergieanlagen auch im Kurzschlussfall erfüllt. - Es kann aber auch vorgesehen sein, den Zwischenkreis-Chopper 45 stärker zu dimensionieren, so dass er auch als Crowbar-Schaltung 40 fungieren kann. In diesem Fall ist die externe Crowbar-Schaltung 40 entbehrlich. Der Aufwand verringert sich dadurch. Es sei aber angemerkt, dass in diesem Fall zumindest die Rückstromdioden 412 des generatorseitigen Wechselrichters 41 entsprechend groß dimensioniert sein müssen.

Der erfindungsgemäße Betrieb lässt sich wie folgt zusammenfassen. Es wird abhängig von einem Betriebspunkt der Netzspannung und der Drehzahl des Generators ein möglichst niedriger Sollwert als Niederwert für die Energie in dem Zwischenkreis bestimmt und eingestellt. Dadurch wird in vielen Betriebspunkten - insbesondere nach Einbruch der Netzspannung - eine deutlich reduzierte Energiemenge des Zwischenkreises gegenüber dem Nennwert eingestellt. Durch eine im Zeitverlauf sprungförmige Änderung der Netzspannung wird transiente Leistung in den Zwischenkreis eingeleitet und kann zum Teil entsprechend der vorher reduzierten Energiemenge des Zwischenkreises durch den Energiespeicher aufgenommen werden. Insbesondere bewirkt die Absenkung der Zwischenkreisspannung gegenüber dem Nennwert während einer Netzstörung - als Vorbereitung auf die Wiederkehr der Netzspannung - eine Verringerung der Häufigkeit der Aktivität der Umrichter-Schutzschaltung, je nachdem, in welcher Höhe und mit welcher Anstiegsgeschwindigkeit die Netzspannung wiederkehrt. Die Höhe der mechanischen Triebstrangbelastung der Windenergieanlage als direkte oder indirekte Folge von sprungförmigen Netzspannungsänderungen wird dadurch verringert bzw. die Häufigkeit der mechanischen Belastungen reduziert, insbesondere nach Spannungsänderungen mit geringer Höhe und/oder geringer Anstiegsgeschwindigkeit.

## Patentansprüche

1. Verfahren zum Betreiben eines Umrichters, insbesondere für Windenergieanlagen mit einem über einen Windrotor (2) angetriebenen Generator (3), zum Einspeisen elektrischer Leistung in ein Netz (9) auch während einer sprungartigen Spannungsstörung, insbesondere Spannungseinbruch im Netz (9), wobei der Umrichter (4) einen Zwischenkreis (42) mit einem zugeordneten Energiespeicher (43) aufweist, **gekennzeichnet durch** Bereitstellen einer maximal möglichen Energieaufnahmekapazität im Energiespeicher (43) des Zwischenkreises (42) durch gezieltes Absenken des Energieniveaus im Zwischenkreis (42) auf einen vorbestimmbaren Niederwert des Energieniveaus in Abhängigkeit von der Kapazität des Energiespeichers (43), wobei nach dem Absenken des Energieniveaus der Energiespeicher (43) zur Aufnahme einer am Ende der sprungartigen Spannungsstörung im Zwischenkreis (42) entstehenden Energiemenge ausgebildet ist.

2. Verfahren nach Anspruch 1, **gekennzeichnet durch** Absenken des Energieniveaus durch Ansteuern eines Zwischenkreis-Choppers (45) bis der Niederwert erreicht ist.

3. Verfahren nach Anspruch 1 oder 2, **gekennzeichnet durch** Vorgeben eines Zwischenkreis-Spannungssollwerts für einen netzseitigen Wechselrichter (48) des Umrichters (4), der eine Entladung des Energiespeichers (43) auf den Niederwert bewirkt.

4. Verfahren nach Anspruch 3, **gekennzeichnet durch** Wählen des Zwischenkreis-Spannungssollwerts derart, dass er bei Spannungseinbruch über der Spannung im Netz (9) liegt, und zwar vorzugsweise um höchstens 15%.

5. Verfahren nach einem der Ansprüche 1 bis 4, **gekennzeichnet durch** ein Wiederzuschalten des generatorseitigen Wechselrichters (41) nach dessen Deaktivierung während der Netzstörung, wenn der Niederwert im Zwischenkreis (42) erreicht ist.

6. Verfahren nach Anspruch 5, **gekennzeichnet durch** Wiederzuschalten erst nach Verstreichen einer Mindestzeitdauer seit Aktivierung einer Umrichter-Schutzschaltung (40) .

7. Verfahren nach einem der Ansprüche 1 bis 4, **gekennzeichnet durch** Verzögern des Zuschaltens des generatorseitigen Wechselrichters (41) bis die Spannung im Netz (9) einen vorbestimmten Wert von vorzugsweise 40-80% der Netzsollspannung erreicht hat.

8. Verfahren nach einem der Ansprüche 1 bis 7, **gekennzeichnet durch** Verwenden eines Gleichspannungszwischenkreises (42) mit einem Kondensator als Energiespeicher (43) .

**9.** Verfahren nach Anspruch 8, **gekennzeichnet durch** Berechnen des Niederwerts als eine Spannung gemäß der Formel

$$U_{DCMin} = Max\left( U_{Netz} \cdot \sqrt{2} \cdot k_{Last1}, \ U_{Netz} \cdot \sqrt{2} \cdot \frac{N - N_{Syn}}{N_{Syn}} \cdot \omega_{21Gener} \cdot k_{Last2} \right)$$

mit $U_{Netz}$ als Effektivwert der verketteten Netzspannung, N der Drehzahl, $N_{Syn}$ der Synchrondrehzahl, $\omega_{21Gener}$ als Windungsverhältnis Rotor zu Stator des Generators und $k_{Last}$ als lastabhängiger Faktor.

**10.** Verfahren nach einem der Ansprüche 1, 2 oder 5 bis 7, **gekennzeichnet durch** Verwenden eines Gleichstromzwischenkreises mit einer Spule als Energiespeicher.

**11.** Verfahren nach einem der Ansprüche 1 bis 10, **gekennzeichnet durch** Bestimmen und Absenken auf den Niederwert vor Erkennen einer erwarteten sprungartigen Spannungsstörung.

**12.** Verfahren nach Anspruch 11, **gekennzeichnet durch** erneutes Bestimmen und Absenken nach Erkennen der sprungartigen Spannungsstörung.

**13.** Umrichter, insbesondere für Windenergieanlagen mit einem über einen Windrotor (2) angetriebenen Generator (3), zum Einspeisen elektrischer Leistung in ein Netz (9) auch während einer sprungartigen Spannungsstörung, insbesondere Spannungseinbruch im Netz (9), wobei der Umrichter (4) einen Zwischenkreis (42) mit einem Energiespeicher (43) aufweist, und eine Steuerungseinrichtung (5) vorgesehen ist, **dadurch gekennzeichnet, dass** die Steuerungseinrichtung (5) ein Sollwertmodul (51) zur Einstellung eines Energieniveaus im Zwischenkreis (42) aufweist, das dazu ausgebildet ist, eine maximal mögliche Energieaufnahmekapazität im Energiespeicher (43) des Zwischenkreises (42) durch gezieltes Absenken des Energieniveaus auf einen vorbestimmbaren Niederwert in Abhängigkeit von einer Kapazität des Energiespeichers (43) im Zwischenkreis (42) bereitzustellen, wobei nach dem Absenken des Energieniveaus der Energiespeicher (43) zur Aufnahme einer am Ende einer sprungartigen Spannungsstörung entstehenden Energiemenge ausgebildet ist.

**14.** Umrichter nach Anspruch 13, **dadurch gekennzeichnet, dass** das Sollwertmodul (51) derart ausgebildet ist, einen Spannungssollwert für einen netzseitigen Wechselrichter (48) des Umrichters (4) zu bestimmen, der eine Entladung des Energiespeichers (43) auf den Niederwert bewirkt.

**15.** Umrichter nach Anspruch 13 oder 14, **dadurch gekennzeichnet, dass** der Zwischenkreis (42) ein Gleichspannungszwischenkreis mit einem Kondensator als Energiespeicher (43) ist.

**16.** Umrichter nach Anspruch 15, **dadurch gekennzeichnet, dass** der Niederwert eine Spannung ist gemäß der Formel

$$U_{DCMin} = Max\left( U_{Netz} \cdot \sqrt{2} \cdot k_{Last1}, \ U_{Netz} \cdot \sqrt{2} \cdot \frac{N - N_{Syn}}{N_{Syn}} \cdot \omega_{21Gener} \cdot k_{Last2} \right)$$

mit $U_{Netz}$ als Effektivwert der verketteten Netzspannung, N der Drehzahl, $N_{Syn}$ der Synchrondrehzahl, $\omega_{21Gener}$ als Windungsverhältnis Rotor zu Stator des Generators und $k_{Last}$ als lastabhängiger Faktor.

**17.** Umrichter nach Anspruch 13 oder 14, **dadurch gekennzeichnet, dass** der Zwischenkreis ein Gleichstromzwischenkreis mit einer Spule als Energiespeicher ist.


**Claims**

**1.** Method for operating a converter, in particular for wind energy installations comprising a generator (3) driven via a wind rotor (2), for feeding electrical power into an electrical grid (9) even during an abrupt voltage disturbance, in particular voltage dip in the electrical grid (9), wherein the converter (4) comprises a link circuit (42) having an assigned energy store (43), **characterized by** providing a maximum possible energy uptake capacity in the energy store (43) of the link circuit (42) by reducing the energy level in the link circuit (42) in a targeted manner to a predeterminable low value of the energy level depending on the capacity of the energy store (43), wherein, after reducing the energy level, the energy store (43) is configured for taking up a quantity of energy that arises in the link circuit (42) at the end of the abrupt voltage disturbance.

2. Method according to Claim 1, **characterized by** reducing the energy level by driving a link circuit chopper (45) until the low value is attained.

3. Method according to Claim 1 or 2, **characterized by** predefining a link circuit setpoint voltage value for an electrical grid-side inverter (48) of the converter (4), which brings about a discharge of the energy store (43) to the low value.

4. Method according to Claim 3, **characterized by** choosing the link circuit setpoint voltage value in such a way that in the event of a voltage dip said value lies above the voltage in the electrical grid (9), specifically preferably by at most 15%.

5. Method according to any of Claims 1 to 4, **characterized by** switching on again the generator-side inverter (41) after the deactivation thereof during the electrical grid disturbances when the low value is attained in the link circuit (42).

6. Method according to Claim 5, **characterized by** switching on again only after a minimum time duration has elapsed since the activation of a converter protective circuit (40).

7. Method according to any of Claims 1 to 4, **characterized by** delaying the switching on of the generator-side inverter (41) until the voltage in the electrical grid (9) has attained a predetermined value of preferably 40-80% of the setpoint electrical grid voltage.

8. Method according to any of Claims 1 to 7, **characterized by** using a DC voltage link circuit (42) having a capacitor as energy store (43).

9. Method according to Claim 8, **characterized by** calculating the low value as a voltage in accordance with the formula

$$U_{DCMin} = Max(U_{Netz} \cdot \sqrt{2} \cdot k_{Last1}, U_{Netz} \cdot \sqrt{2} \cdot \frac{N - N_{Syn}}{N_{Syn}} \cdot \omega_{21Gener} \cdot k_{Last2})$$

where $U_{Netz}$ denotes the root-mean square value of the phase-to-phase electrical grid voltage, N denotes the rotational speed, $N_{Syn}$ denotes the synchronous rotational speed, $\omega_{21Gener}$ denotes the turns ratio of rotor to stator of the generator, and $k_{Last}$ denotes a load-dependent factor.

10. Method according to any of Claims 1, 2 or 5 to 7, **characterized by** using a DC link circuit having a coil as energy store.

11. Method according to any of Claims 1 to 10, **characterized by** determining and reducing to the low value before identifying an expected abrupt voltage disturbance.

12. Method according to Claim 11, **characterized by** determining and reducing anew after identifying the abrupt voltage disturbance.

13. Converter, in particular for wind energy installations comprising a generator (3) driven via a wind rotor (2), for feeding electrical power into an electrical grid (9) even during an abrupt voltage disturbance, in particular voltage dip in the electrical grid (9), wherein the converter (4) comprises a link circuit (42) having an energy store (43), and a control device (5) is provided, **characterized in that** the control device (5) comprises a setpoint value module (51) for setting an energy level in the link circuit (42), which setpoint value module is configured to provide a maximum possible energy uptake capacity in the energy store (43) of the link circuit (42) by reducing the energy level in the link circuit (42) in a targeted manner to a predeterminable low value depending on a capacity of the energy store (43), wherein, after reducing the energy level, the energy store (43) is configured for taking up a quantity of energy that arises at the end of an abrupt voltage disturbance.

14. Converter according to Claim 13, **characterized in that** the setpoint value module (51) is configured in such a way as to determine a setpoint voltage value for an electrical grid-side inverter (48) of the converter (4), which brings about a discharge of the energy store (43) to the low value.

15. Converter according to Claim 13 or 14, **characterized in that** the link circuit (42) is a DC voltage link circuit having a capacitor as energy store (43).

16. Converter according to Claim 15, **characterized in that** the low value is a voltage in accordance with the formula

$$U_{DCMin} = Max(U_{Netz} \cdot \sqrt{2} \cdot k_{Last1}, U_{Netz} \cdot \sqrt{2} \cdot \frac{N - N_{Syn}}{N_{Syn}} \cdot \omega_{21Gener} \cdot k_{Last2})$$

where $U_{Netz}$ denotes the root-mean square value of the phase-to-phase electrical grid voltage, N denotes the rotational speed, $N_{Syn}$ denotes the synchronous rotational speed, $\omega_{21Gener}$ denotes the turns ratio of rotor to stator of the generator, and $k_{Last}$ denotes a load-dependent factor.

17. Converter according to Claim 13 or 14, **characterized in that** the link circuit is a DC link circuit having a coil as energy store.

## Revendications

1. Procédé de commande d'un convertisseur, en particulier pour éoliennes, comportant un générateur (3) entraîné par un rotor éolien (2), pour alimenter un réseau (9) en énergie électrique même pendant une perturbation brusque de la tension, en particulier une chute de tension sur le réseau (9), dans lequel le convertisseur (4) comporte un circuit intermédiaire (42) comprenant un accumulateur d'énergie (43) associé, **caractérisé par** la fourniture d'une capacité d'absorption d'énergie maximale possible dans l'accumulateur d'énergie (43) du circuit intermédiaire (42) par un abaissement sélectif du niveau d'énergie dans le circuit intermédiaire (42) à une valeur basse prédéfinissable du niveau d'énergie, en fonction de la capacité de l'accumulateur d'énergie (43), dans lequel, après que le niveau d'énergie a été abaissé, l'accumulateur d'énergie (43) est conçu pour absorber une quantité d'énergie qui apparaît dans le circuit intermédiaire (42) à la fin de la perturbation brusque de la tension.

2. Procédé selon la revendication 1, **caractérisé par** le fait d'abaisser le niveau d'énergie en commandant un hacheur de circuit intermédiaire (45) jusqu'à ce que la valeur basse soit atteinte.

3. Procédé selon la revendication 1 ou 2, **caractérisé par** le fait de prédéfinir une valeur de consigne de tension de circuit intermédiaire pour un onduleur côté réseau (48) du convertisseur (4), qui provoque une décharge de l'accumulateur d'énergie (43) à la valeur basse.

4. Procédé selon la revendication 3, **caractérisé par** le fait de sélectionner la valeur de consigne de tension de circuit intermédiaire de manière à ce qu'elle soit supérieure à la tension du réseau (9) lors d'une chute de tension, de préférence d'au plus 15%.

5. Procédé selon l'une des revendications 1 à 4, **caractérisé par** le fait de reconnecter l'onduleur côté générateur (41) après sa désactivation pendant la perturbation du réseau lorsque la valeur basse du circuit intermédiaire (42) est atteinte.

6. Procédé selon la revendication 5, **caractérisé par le fait qu'**une reconnexion n'est effectuée qu'après qu'une période minimale se soit écoulée depuis l'activation d'un circuit de protection (40) du convertisseur.

7. Procédé selon l'une des revendications 1 à 4, **caractérisé par** le fait de retarder le raccordement de l'onduleur côté générateur (41) jusqu'à ce que la tension du réseau (9) ait atteint une valeur prédéterminée, de préférence de 40-80% de la tension nominale du réseau.

8. Procédé selon l'une des revendications 1 à 7, **caractérisé par** le fait d'utiliser un circuit intermédiaire à courant continu (42) comportant un condensateur en tant qu'accumulateur d'énergie (43).

9. Procédé selon la revendication 8, **caractérisé par** le fait de calculer la valeur basse sous la forme d'une tension conforme à la formule suivante

$$U_{DCMin} = Max\left(U_{Netz} \cdot \sqrt{2} \cdot k_{Last1}, U_{Netz} \cdot \sqrt{2} \cdot \frac{N - N_{Syn}}{N_{Syn}} \cdot \omega_{21Gener} \cdot k_{Last2}\right)$$

où $U_{Netz}$ est la valeur effective de la tension de réseau chaînée, N est la vitesse de rotation, $N_{syn}$ est la vitesse synchrone, $\omega_{21Gener}$ est le rapport d'enroulement rotor sur stator du générateur et $k_{Last}$ est un facteur dépendant de la charge.

10. Procédé selon l'une des revendications 1, 2 ou 7, **caractérisé par** le fait d'utiliser un circuit intermédiaire à courant continu comportant une bobine en tant qu'accumulateur d'énergie.

11. Procédé selon l'une des revendications 1 à 10, **caractérisé par** le fait d'effectuer une détermination et un abaissement à la valeur basse avant de détecter une perturbation brusque de la tension attendue.

12. Procédé selon la revendication 11, **caractérisé par** le fait d'effectuer à nouveau la détermination et l'abaissement après la détection de la perturbation brusque de la tension.

13. Convertisseur, en particulier pour éoliennes, comportant un générateur (3) entraîné par l'intermédiaire d'un rotor éolien (2), pour alimenter un réseau (9) en énergie électrique même pendant une perturbation brusque de la tension, en particulier une chute de tension sur le réseau (9), dans lequel le convertisseur (4) comporte un circuit intermédiaire (42) comprenant un accumulateur d'énergie (43) et dans lequel il est prévu un dispositif de commande (5), **caractérisé en ce que** le dispositif de commande (5) comporte un module de valeur de consigne (51) qui est destiné à régler un niveau d'énergie dans le circuit intermédiaire (42) et qui est conçu pour fournir dans le circuit intermédiaire (42) une capacité d'accumulation maximale possible d'énergie dans l'accumulateur d'énergie (43) du circuit intermédiaire (42) par un abaissement sélectif du niveau d'énergie à une valeur basse prédéfinissable en fonction de la capacité de l'accumulateur d'énergie (43), dans lequel, après que le niveau d'énergie a été abaissé, l'accumulateur d'énergie (43) est conçu pour absorber une quantité d'énergie qui apparaît à la fin d'une perturbation brusque de la tension.

14. Convertisseur selon la revendication 13, **caractérisé en ce que** le module de valeur de consigne (51) est conçu de manière à déterminer une valeur de consigne de tension pour un onduleur côté réseau (48) du convertisseur (4), qui provoque une décharge de l'accumulateur d'énergie (43) à la valeur basse.

15. Convertisseur selon la revendication 13 ou 14, **caractérisé en ce que** le circuit intermédiaire (42) est un circuit intermédiaire à courant continu comportant un condensateur en tant qu'accumulateur d'énergie (43).

16. Convertisseur selon la revendication 15, **caractérisé en ce que** la valeur basse est une tension conforme à la formule :

$$U_{DCMin} = Max\left(U_{Netz} \cdot \sqrt{2} \cdot k_{Last1}, U_{Netz} \cdot \sqrt{2} \cdot \frac{N - N_{Syn}}{N_{Syn}} \cdot \omega_{21Gener} \cdot k_{Last2}\right)$$

où $U_{Netz}$ est la valeur effective de la tension de réseau chaînée, N est la vitesse de rotation, $N_{syn}$ est la vitesse synchrone, $\omega_{21Gener}$ est le rapport d'enroulement rotor sur stator du générateur et $k_{Last}$ est un facteur dépendant de la charge.

17. Convertisseur selon la revendication 13 ou 14, **caractérisé en ce que** le circuit intermédiaire est un circuit intermédiaire à courant continu comportant une bobine en tant qu'accumulateur d'énergie.

Fig. 1

EP 1 921 738 B1

Fig. 2

EP 1 921 738 B1

**a)** Spannung Netz

**b)** Erkennung Spannungseinbruch

**c)** Zwischenkreisspannung Soll, Istwert

**d)** Crowbar

[s]

**Fig. 3**

a) Spannung Netz

b) Erkennung Spannungseinbruch

c) Zwischenkreisspannung Soll, Istwert

d) Crowbar

0    0.05    0.1    0.15    0.2    0.25    0.3    0.35    0.4

[s]

Fig. 4

**EP 1 921 738 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03065567 A
- WO 2005027301 A

- WO 2006069569 A